# EUROPÄISCHE PATENTSCHRIFT

(11) **EP 2 776 737 B1**
(45) Veröffentlichungstag und Bekanntmachung des Hinweises auf die Patenterteilung: **21.11.2018**
(21) Anmeldenummer: 12770040.9
(22) Anmeldetag: 24.09.2012
(51) Int. Cl.: F16G 3/00

(54) **GURT ODER GURTSELEMENT MIT OFFENEM ENDE UND BEFESTIGUNGSVORRICHTUNG DAFÜR**
BELT OR BELT ELEMENT WITH AN OPEN END AND FASTENING DEVICE THEREFOR
COURROIE OU ÉLÉMENT DE COURROIE PRÉSENTANT UNE EXTRÉMITÉ OUVERTE ET DISPOSITIF DE FIXATION DE LADITE COURROIE

(30) Priorität: 09.11.2011 DE 102011055168
(43) Veröffentlichungstag der Anmeldung: 17.09.2014
(73) Patentinhaber: ContiTech Transportbandsysteme GmbH, 30165 Hannover (DE)
(72) Erfinder: MÖSCHEN-SIEKMANN, Michael, 37176 Nörten-Hardenberg (DE); HÜLS, Achim, 30890 Barsinghausen (DE)
(74) Vertreter: Finger, Karsten
(86) Internationale Anmeldenummer: PCT/EP2012/068722
(87) Internationale Veröffentlichungsnummer: WO 2013/068170

(56) Entgegenhaltungen:
- FR-A- 1 300 135
- GB-A- 712 116
- GB-A- 720 017
- GB-A- 1 063 303
- US-A- 2 566 262

## Beschreibung

Die Erfindung betrifft einen Gurt oder ein Gurtsegment mit im Wesentlichen in Längsrichtung des Gurtes oder Gurtsegments verlaufenden, im Wesentlichen parallel zueinander angeordneten Stahlseilen. Der Gurt oder das Gurtsegment weist wenigstens ein offenes Ende auf

Es sind seit langem Gurte oder Gurtsegmente bekannt, die zum Anheben oder Ziehen von Lasten verwendet werden. Hierzu können Gurte oder Gurtsegmente verwendet werden, die ein offenes Ende aufweisen, an dem die anzuhebende oder zu ziehende Last befestigt werden kann. Hier wird herkömmlicherweise das offene Ende des Gurtes oder Gurtsegments um einen Teil oder Teilbereich der Last wie z.B. einen Haken oder dergleichen als Schlaufe geführt.

Die Ausbildung der Schlaufe oder auch Lasche erfolgt dabei üblicherweise derart, dass das offene Ende des Gurtes oder Gurtsegments um den Haken oder dergleichen umgeklappt wird, so dass das offene Ende auf einem Teilbereich des Gurtes oder Gurtsegments aufliegt und dort die beiden Bereiche durch eine Klemmung aufeinander gepresst werden. Hierdurch wird eine kraftschlüssige Verbindung erzeugt.

Nachteilig ist hierbei, dass bei sehr vielen Anwendungsfällen der Gurt oder das Gurtsegment durch eine geschlossene Öffnung geführt wird und erst danach die Schlaufe ausgebildet werden kann. In diesen Fällen ist die Durchführung der Klemmverbindung, die die Last sicher tragen bzw. ziehen können muss, unter teilweise sehr engen und schlecht zugänglichen Umständen vorzunehmen. Dies erschwert und verteuert die Montage sowie erhöht das Risiko einer nicht ordnungsgemäß ausgeführten Klemmverbindung.

Beispielsweise können derartige Gurte zum Anheben von Fahrstühlen verwendet werden. Dann ist die Ausbildung der Schlaufe durch das Herstellen der Klemmverbindung z.B. im Inneren des Fahrstuhlschachtes vorzunehmen und das entsprechende Montagegerät, welches insbesondere die Klemmung herstellen soll, dort einzurichten. Hierdurch wird die Montage deutlich erschwert.

Die Aufgabe der vorliegenden Erfindung ist es, einen Gurt oder ein Gurtsegment der eingangs beschriebenen Art bereit zu stellen, das sich einfacher und schneller an einer Last oder dergleichen montieren lässt.

Die GB 1 063 303 A beschreibt ein Förderband mit einem flexiblen Gummielement und mit einem in Längsrichtung starren Endelement, das an jedem Ende davon angeordnet ist, wobei das Element durch eine Schicht aus länglichen parallelen gummibeschichteten Schnüren verstärkt ist, die innerhalb des Endelements gestaucht sind. Letztere bestehen aus starren Metall- oder Nylonsegmenten, die durch flexible Gummielemente getrennt und an diese gebunden sind. Die Segmente haben einen T-förmigen Querschnitt, der in Längsrichtung des Riemens gebohrt ist, um die Enden der Korde aufzunehmen. Eine Anordnung dieser Riemen wird gebildet, indem ein Endelement von jedem von zwei benachbarten Riemen in entgegengesetzte Seiten eines Verbindungselements geschoben wird. Letztere umfasst eine Vielzahl von starren Segmenten, die durch flexible Gummielemente getrennt und mit diesen verbunden sind. Jede Seite des Elements ist mit einer U-förmigen Nut ausgebildet, in die die T-förmigen Elemente gleiten.

Die GB 712 116 A beschreibt eine Befestigungsvorrichtung für ein Band mit einem oder mehreren Verstärkungssträngen aus beispielsweise Draht, eingebettet in einer Ummantelung aus elastischem flexiblem Material, wie Gummi, Balata oder einer plastifizierten Polyvinylzusammensetzung. Die Befestigungsvorrichtung umfasst männliche und weibliche Anschlusselemente an den Verstärkungssträngen an benachbarten Enden des Riemens befestigt. Das männliche Element umfasst eine Fassung zum Befestigen an dem Ende des Verstärkungsstrangs durch Gesenkschmieden oder Löten und einen viertelseitigen Schaft mit einem halbrunden Kopf. Das weibliche Element hat eine ähnliche Buchse, einen Schaft und einen Kopf, die in einem Gehäuse enthalten sind. Die Enden der Köpfe sowohl des männlichen als auch des weiblichen Elements haben abgeschrägte Oberflächen, die an den beiden zusammengeschobenen Elementen ineinandergreifen und die zwei Elemente relativ zueinander verdrehen, bis jeder Kopf hinter dem anderen zurückschnappt, weil die Stränge wieder einen normal entspannten Zustand annehmen, in dem sie zunächst zusammengebaut werden müssen. Somit können zwei Enden eines Riemens oder Längen eines Riemens mit gegenüberliegenden männlichen und weiblichen Anschlüssen schnell durch Zusammenpressen des männlichen und des weiblichen Elements verbunden werden.

Die FR 1 300 135 A beschreibt ein Verfahren, bei dem zwei flexible Panzerstreifen in Längsrichtung mittels metallischer Kabel miteinander verbunden werden. Diese flexiblen Bänder können z.B. als Transportbänder oder Laufstreifen für Kettenfahrzeuge eingesetzt werden.

Die US 2 566 262 A bezieht sich auf das Spleißen von Gurten mit längs verlaufenden Verstärkungselementen und ist besonders nützlich für das Spleißen von Gurten mit zugfesten Elementen, wie z.B. metallischen Schnüren, einschließlich Draht, Kabel, Seil, etc.

Die Aufgabe wird erfindungsgemäß durch einen Gurt oder ein Gurtsegment nach Anspruch 1 bzw. eine Befestigungsvorrichtung nach Anspruch 3 gelöst. Vorteilhafte Weiterbildungen sind in den jeweiligen Unteransprüchen beschrieben.

Somit betrifft die vorliegende Erfindung einen Gurt oder ein Gurtsegment gemäß dem Oberbegriff des Anspruchs 1, dass sich dadurch aufzeichnet, dass der Gurt oder das Gurtsegment an dem offenen Ende eine Befestigungsvorrichtung aufweist, die mit zumindest einem Teil der Stahlseile mittels Klemmung verbunden ist.

Der Erfindung liegt die Erkenntnis zugrunde, dass die Verbindung zwischen den Stahlseilen eines Gurtes oder Gurtsegments und einem weiteren, vorzugsweise metallischen Körper, durch Klemmung erfolgen kann. Hierzu können die Stahlseile in entsprechende Öffnungen des weiteren Körpers eingeführt werden. Dann werden diese Öffnungen von Außen zusammengedrückt, so dass sich ihr Durchmesser bzw. Querschnitt derartig verengt, dass eine kraftschlüssige Klemmverbindung zwischen dem Körper und den Stahlseilen entsteht. Diese kann 100% der Seilbruchlast übertragen.

Vorteilhaft ist hierbei, dass auf diese Weise ein Körper unter z.B. Werkstattbedingungen an dem offenen Ende des Gurtes oder Gurtsegments vorgesehen und dieser Gurt oder dieses Gurtsegment dann bei der Montage mittels dieses Körpers an einer Last, Anlage oder dergleichen einfach und schnell montiert werden kann. So kann vorzugsweise der Körper als Befestigungsvorrichtung z.B. einen Haken oder eine Aussparung aufweisen, die bei der Montage in einen korrespondieren Haken oder eine Aufhängung lediglich eingeführt werden muss, um den Gurt oder das Gurtsegment an der Last oder dergleichen zu befestigen. Auch kann die Aussparung mittels einer Verschraubung oder Nietung oder dergleichen an einer Last oder dergleichen befestigt werden. Auch kann im Falle eines Schadens des Gurtes bzw. Gurtsegments dieser bzw. dieses schnell und einfach ausgetauscht werden. Die Klemmkraft bei der Ausbildung einer Schlaufe ist begrenzt.

Ferner kann der Bereich, der zur Herstellung der Verbindung benötigt wird, deutlich kleiner und mit geringerer Bauhöhe, insbesondere in Längsrichtung des Gurtes bzw. Gurtsegments, vorgesehen werden, da eine derartige Klemmverbindung weniger Platz in Anspruch nimmt als die Ausbildung einer Schlaufe, Öse oder dergleichen.

In allen Fällen kann die Montage bzw. der Austausch des Körpers, insbesondere als Befestigungsvorrichtung, unter gut zugänglichen, ausgeleuchteten und sauberen Bedingungen erfolgen. Auch kann die Klemmverbindung vor der Montage an der Last auf ihren Halt geprüft werden. Bei der anschließenden Montage des so ausgestatteten Gurtes oder Gurtsegments an der Last oder dergleichen muss lediglich das Einhaken, Anschrauben oder dergleichen erfolgen, wodurch diese Verbindung unter den meist ungünstigen und schlecht zugänglichen Bedingungen schnell, einfach und sicher erfolgen kann.

Ein Ausführungsbeispiel und weitere Vorteile der Erfindung werden nachstehend im Zusammenhang mit den folgenden Figuren erläutert. Darin zeigt:
- Fig. 1: eine schematische Darstellung einer herkömmlichen Befestigung eines Gurtes mit einem offenen Ende an einem zylindrischen Körper;
- Fig. 2: eine perspektivische schematische Darstellung einer erfindungsgemäßen Befestigungsvorrichtung;
- Fig. 3: eine perspektivische schematische Darstellung eines erfindungsgemäßen Gurtes bzw. Gurtsegment mit Befestigungsvorrichtung, in Längsrichtung aufgeschnitten; und
- Fig. 4: eine perspektivische schematische Darstellung eines erfindungsgemäßen Gurtes bzw. Gurtsegment mit Befestigungsvorrichtung von Außen.

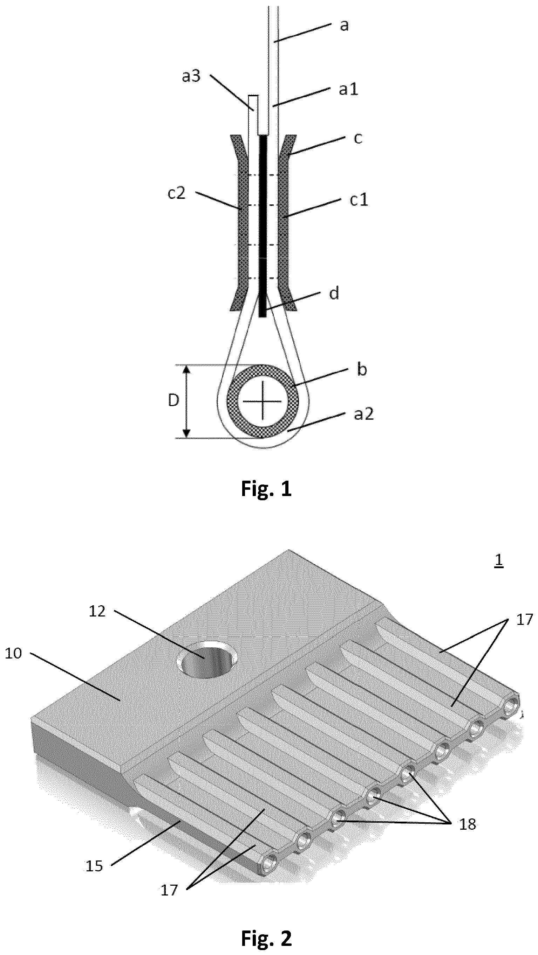

Fig. 1 zeigt eine schematische Darstellung einer herkömmlichen Befestigung eines Gurtes a mit einem offenen Ende an einem zylindrischen Körper b. Das offene Ende des Gurtes a wird hierbei um den zylindrischen Körper b herum geführt. Hierbei liegt der Gurt a mit seinem Bereich a2 auf einen Bereich des zylindrischen Körpers b an. Das offene Ende des Gurtes steht dabei mit seinem Bereich a3 derart über den zylindrischen Körper b hinaus über, dass der Bereich a3 mit einem Bereich a1 des Gurtes a zusammengeführt werden kann. Die einander flächig berührenden Bereiche a1 und a3 werden dann mit einer Klemmvorrichtung c aneinander gepresst, so dass die Bereiche a1 und a3 eine kraftschlüssige Verbindung eingehen und das offene Ende des Gurtes a eine Schlaufe a2 um den zylindrischen Körper ausbildet. Die Klemmvorrichtung c kann hierzu zwei Klemmelemente c1 und c2 aufweisen, die jeweils von Außen auf die einander flächig berührenden Bereiche a1 und a3 wirken. Zwischen den Bereichen a1 und a3 kann ein Reibelement d vorgesehen sein, welches die Reibung zwischen den Bereichen a1 und a3 verbessert und hierdurch den Kraftschluß erhöht.

Fig. 2 zeigt eine perspektivische schematische Darstellung einer erfindungsgemäßen Befestigungsvorrichtung 1. Die Befestigungsvorrichtung 1 weist einen ersten Teilbereich 10 auf, der auch als Kopfstück 10 der Befestigungsvorrichtung 1 bezeichnet werden kann. Dieser ist mit einem zweiten Teilbereich 15 verbunden, der auch als Klemmstück 15 der Befestigungsvorrichtung 1 bezeichnet werden kann. Das Kopfstück 10 und das Klemmstück 15 sind derart miteinander verbunden und ausgestaltet, dass sie sicher die Kräfte zwischen einer Last und einem Gurt oder Gurtsegment 2 übertragen können. Vorzugsweise sind das Kopfstück 10 und das Klemmstück 15 einteilig, d.h. massiv aus einem Körper gefertigt, vorgesehen.

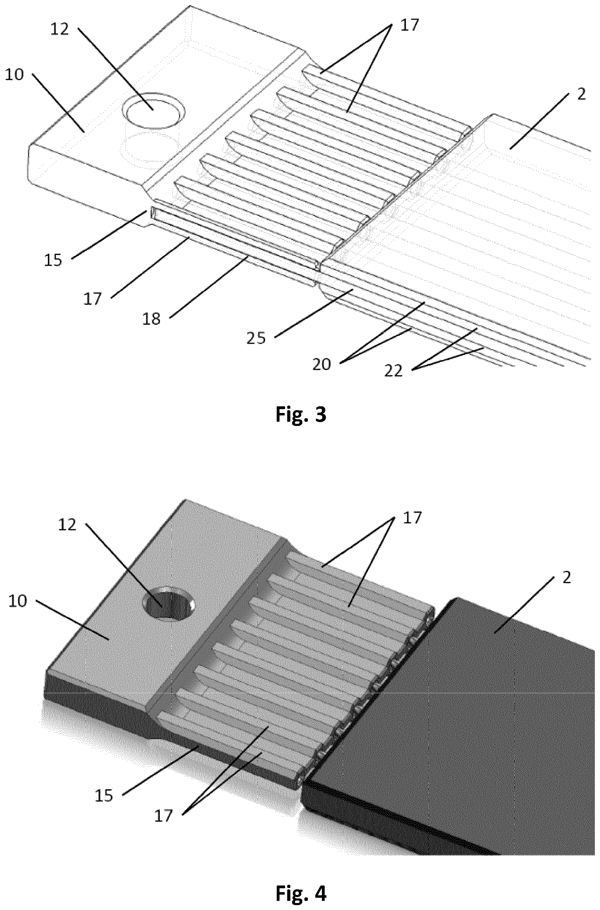

Das Kopfstück 10 weist ein Verbindungselement 12 auf, welches z.B. ein Haken oder dergleichen sein kann. In der dargestellten Ausführungsform ist das Verbindungselement 12 eine Aussparung 12, welches senkrecht zur Längsrichtung der Stahlseile 25 des Gurtes bzw. Gurtsegments 2 und senkrecht zur Ebene des Gurtes bzw. Gurtsegments 2 verläuft (vgl. Fig. 3 und 4). Mittels dieser Aussparung 12, die auch als Öffnung 12 oder Durchgangsbohrung 12 bezeichnet werden kann, kann das Kopfstück 12 der Befestigungsvorrichtung 10 in einen Haken oder einen Vorsprung einer Last oder auch Halterung eingehängt oder auch an einer Last oder Halterung angeschraubt werden.

Das Klemmstück 15 weist eine Klemmvorrichtung 17, 18 auf, die in der dargestellten Ausführungsform aus einer Mehrzahl von Klemmstege 17 auf, die jeweils wenigstens eine Längsbohrung 18 aufweisen. In die Längsbohrungen 18 können die Stahlseile 25 des Gurtes bzw. Gurtsegments 2 eingeführt werden. In diesem Zustand kann auf die Klemmstege 17 von Außen ein Kraft ausgeübt werden, so dass sich der Durchmesser bzw. Querschnitt der Öffnungen 18 derartig verengt, dass eine kraftschlüssige Klemmverbindung zwischen dem Inneren der Öffnungen 18 und damit den Klemmstehen 17 und den Stahlseilen 25 entsteht.

Fig. 3 zeigt eine perspektivische schematische Darstellung eines erfindungsgemäßen Gurtes bzw. Gurtsegment 2 mit Befestigungsvorrichtung 1, in Längsrichtung aufgeschnitten. Fig. 4 zeigt eine perspektivische schematische Darstellung eines erfindungsgemäßen Gurtes bzw. Gurtsegment 2 mit Befestigungsvorrichtung 1 von Außen.

In diesem Schnitt ist zu erkennen, dass die Stahlseile 25 aus dem offenen Ende des Gurtes bzw. Gurtsegments 2 in Längsrichtung herausragen. Dieser Bereich der Stahlseile 25 wird zur Anbindung des Gurtes bzw. Gurtsegments 2 an die Befestigungsvorrichtung 1 verwendet, indem dieser Bereich der Stahlseile 25 in die Öffnungen 18 des Klemmstücks 15 eingeführt und dort durch Verpressen der Klemmstege 17 eingeklemmt wird.

Vorzugsweise wird ein Gurt bzw. Gurtsegment 2 verwendet, der bzw. das ein elastomeres Material 22 aufweist, in das die Stahlseile 25 als Festigkeitsträger eingebettet sind.

Besonders bevorzugt ist es, wenn dieser elastomere Gurt bzw. dieses elastomere Gurtsegment 2 auf wenigstens einer Oberflächenseite, insbesondere beiden Oberflächenseiten, eine elastomere Deckschicht 20 aufweist. Auf diese Weise kann die elastomere Deckschicht 20 derart ausgebildet sein, dass sie gegen äußere Einflüsse möglichst widerstandsfähig ist, und die elastomere Kernschicht 22 derart, dass die eine möglichst gute Anbindung an die Stahlseile 25 gewährleistet.

### Bezugszeichenliste

### (Teil der Beschreibung)

- a: Gurt oder Gurtsegment nach dem Stand der Technik
- a1: erster Bereich des Gurtes a, Klemmbereich
- a2: zweiter Bereich des Gurtes a, Schlaufe
- a3: dritter Bereich des Gurtes a, Klemmbereich
- b: zylindrischer Körper
- c: Klemmvorrichtung
- c1: erstes Klemmelemente
- c2: zweites Klemmelemente
- d: Reibelement

- 1: Befestigungsvorrichtung
- 10: erster Teilbereich bzw. Kopfstück der Befestigungsvorrichtung 1
- 12: Verbindungselement bzw. Aussparung des Kopfstücks 10
- 15: zweiter Teilbereich bzw. Klemmstück der Befestigungsvorrichtung 1
- 17: Klemmvorrichtung bzw. Klemmstege des Klemmstücks 15
- 18: Klemmvorrichtung bzw. Längsbohrungen des Klemmstücks 15
- 2: Gurt oder Gurtsegment
- 20: Gummideckschicht, obere und untere
- 22: Kerngummischicht
- 25: Stahlseile, ggfs. als Festigkeitsträger

## Patentansprüche

1. Offener Gurt (2) oder offenes Gurtsegment (2) zum Anheben oder zum Ziehen von Lasten, mit
im Wesentlichen in Längsrichtung des offenen Gurtes (2) oder des offenen Gurtsegments (2) verlaufenden, im Wesentlichen parallel zueinander angeordneten Stahlseilen (25),
wobei der offene Gurt (2) oder das offene Gurtsegment (2) wenigstens ein offenes Ende aufweist,
**dadurch gekennzeichnet, dass**
der offene Gurt (2) oder das offene Gurtsegment (2) an dem offenen Ende eine Befestigungsvorrichtung (1) aufweist, die mit zumindest einem Teil der Stahlseile (25) mittels Klemmung verbunden ist.

2. Offener Gurt (2) oder offenes Gurtsegment (2) nach Anspruch 1,
wobei der offene Gurt (2) oder das offene Gurtsegment (2) im Wesentlichen einen elastomeren Werkstoff (22) aufweisen, in den die Stahlseile (25) als Festigkeitsträger eingebettet sind.

3. Befestigungsvorrichtung (1) für einen offenen Gurt (2) oder ein offenes Gurtsegment (2) mit im Wesentlichen in Längsrichtung verlaufenden, im Wesentlichen parallel zueinander angeordneten Stahlseilen (25), mit
einem ersten Teilbereich (10) mit einem Verbindungselement (12), welches mit einem korrespondierenden Verbindungselement zusammenwirken kann, und
einem zweiten Teilbereich (15) mit einer Klemmvorrichtung (17, 18), welche die Stahlseile (25) des offenen Gurtes oder des offenen Gurtsegments (2) zumindest teilweise aufnehmen und mittels Klemmung halten kann.

4. Befestigungsvorrichtung (1) nach Anspruch 3,
wobei der offene Gurt (2) oder das offene Gurtsegment (2) im Wesentlichen einen elastomeren Werkstoff (22) aufweisen, in den die Stahlseile (25) als Festigkeitsträger eingebettet sind.

5. Befestigungsvorrichtung (1) nach Anspruch 3 oder 4,
wobei die Klemmvorrichtung (17, 18) eine Mehrzahl von Öffnungen (18) aufweist, in die die Stahlseile (25) eingeführt und dort eingeklemmt werden können.

## Claims

1. Open belt (2) or open belt segment (2) for lifting or for pulling loads, having
steel cables (25) running substantially in the longitudinal direction of the open belt (2) or of the open belt segment (2) and arranged substantially parallel to one another,
wherein the open belt (2) or the open belt segment (2) has at least one open end,
**characterized in that**
the open belt (2) or the open belt segment (2) has at the open end a fastening device (1) which is connected to at least one part of the steel cables (25) by means of clamping.

2. Open belt (2) or open belt segment (2) according to Claim 1,
wherein the open belt (2) or the open belt segment (2) substantially contains an elastomeric material (22) in which the steel cables (25) are embedded as reinforcing elements.

3. Fastening device (1) for an open belt (2) or an open belt segment (2) having steel cables (25) running substantially in the longitudinal direction and arranged substantially parallel to one another, having
a first part region (10) with a connecting element (12) which can interact with a corresponding connecting element, and
a second part region (15) with a clamping device (17, 18) which can at least partially receive the steel cables (25) of the open belt or of the open belt segment (2) and retain them by means of clamping.

4. Fastening device (1) according to Claim 3,
wherein the open belt (2) or the open belt segment (2) substantially contains an elastomeric material (22) in which the steel cables (25) are embedded as reinforcing elements.

5. Fastening device (1) according to Claim 3 or 4,
wherein the clamping device (17, 18) has a plurality of openings (18) into which the steel cables (25) can be inserted and clamped therein.

## Revendications

1. Courroie ouverte (2) ou segment de courroie ouvert (2) servant à soulever ou à tirer des charges, comprenant
des câbles en acier (25) s'étendant sensiblement dans la direction longitudinale de la courroie ouverte (2) ou du segment de courroie ouvert (2) et disposés sensiblement parallèlement les uns aux autres,
la courroie ouverte (2) ou le segment de courroie ouvert (2) comprenant au moins une extrémité ouverte,
caractérisé(e) en ce que
la courroie ouverte (2) ou le segment de courroie ouvert (2) comprend, à l'extrémité ouverte, un dispositif de fixation (1) qui est relié par serrage à au moins une partie des câbles en acier (25).

2. Courroie ouverte (2) ou segment de courroie ouvert (2) selon la revendication 1,
la courroie ouverte (2) ou le segment de courroie ouvert (2) comprenant sensiblement une matière élastomère (22) dans laquelle les câbles en acier (25) sont noyés en tant qu'éléments de renfort.

3. Dispositif de fixation (1) pour une courroie ouverte (2) ou un segment de courroie ouvert (2) comprenant des câbles en acier (25) s'étendant sensiblement dans la direction longitudinale et disposés sensiblement parallèlement les uns aux autres, comprenant
une première région partielle (10) dotée d'un élément de liaison (12), lequel peut coopérer avec un élément de liaison correspondant, et
une deuxième région partielle (15) dotée d'un dispositif de serrage (17, 18), lequel peut recevoir au moins partiellement et retenir par serrage les câbles en acier (25) de la courroie ouverte ou du segment de courroie ouvert (2).

4. Dispositif de fixation (1) selon la revendication 3,
la courroie ouverte (2) ou le segment de courroie ouvert (2) comprenant sensiblement une matière élastomère (22) dans laquelle les câbles en acier (25) sont noyés en tant qu'éléments de renfort.

5. Dispositif de fixation (1) selon la revendication 3 ou 4,
le dispositif de serrage (17, 18) comprenant une pluralité d'ouvertures (18) dans lesquelles les câbles en acier (25) peuvent être introduits et y être serrés.
